# FASCICULE DE BREVET EUROPEEN

(11) **EP 2 517 051 B1**
(45) Date de publication et mention de la délivrance du brevet: **21.08.2019**
(21) Numéro de dépôt: 10795708.6
(22) Date de dépôt: 20.12.2010
(51) Int. Cl.: G01V 3/08

(54) **PROCÉDÉ ET DISPOSITIF D'IDENTIFICATION D'UN SOUS-ENSEMBLE DE MESURES, PROCÉDÉ ET SYSTÈME DE LOCALISATION D'UN OBJET, SUPPORT D'ENREGISTREMENT POUR CES PROCÉDÉS**
VERFAHREN UND VORRICHTUNG ZUR ERMITTLUNG EINER TEILMENGE VON MESSERGEBNISSEN, VERFAHREN UND SYSTEM ZUR ORTUNG EINES OBJEKTS, AUFZEICHNUNGSMEDIUM FÜR DIESE VERFAHREN
METHOD AND DEVICE FOR IDENTIFYING A SUBSET OF MEASUREMENTS, METHOD AND SYSTEM FOR LOCATING AN OBJECT, RECORDING MEDIUM FOR THESE METHODS

(30) Priorité: 22.12.2009 FR 0959426
(43) Date de publication de la demande: 31.10.2012
(73) Titulaire: Commissariat à l'Énergie Atomique et aux Énergies Alternatives, 75015 Paris (FR)
(72) Inventeur: CATTIN, Viviane, 38120 Saint Egrève (FR); LESECQ, Suzanne, 38190 Froges (FR); SPRYNSKI, Nathalie, 38830 Saint Pierre d'Allevard (FR)
(74) Mandataire: Colombo, Michel
(86) Numéro de dépôt international: PCT/EP2010/070317
(87) Numéro de publication internationale: WO 2011/076767

(56) Documents cités:
- EP-A1- 1 887 309
- WO-A1-00/23824
- WO-A1-2006/054295
- US-A1- 2006 122 497
- US-A1- 2009 070 063

## Description

L'invention concerne un procédé et un dispositif d'identification d'un sous-ensemble de mesures comprenant une mesure perturbée par un perturbateur magnétique. L'invention concerne également un procédé et un système de localisation d'un objet dans un référentiel mettant en oeuvre le procédé d'identification ci-dessus. Enfin, l'invention concerne également un support d'enregistrement d'informations pour la mise en oeuvre de ces procédés.

Un perturbateur de champ magnétique est ici défini comme étant tout objet qui altère ou déforme un champ magnétique émis à proximité. Par exemple, le perturbateur peut être une pièce conductrice. Dans ce cas, l'altération du champ magnétique est due à l'apparition de courant de Foucault (« Eddy Current ») dans la pièce conductrice. La pièce conductrice est par exemple une pièce métallique. Le perturbateur peut également être une pièce magnétique telle qu'une pièce paramagnétique, ferromagnétique ou diamagnétique. Dans le cas des pièces ferromagnétiques, l'altération du champ magnétique est due au fait que cette pièce déforme les lignes des champs magnétiques.

Lorsqu'un perturbateur magnétique est présent à proximité d'une source de champ magnétique et d'un transducteur de champ magnétique, le champ magnétique mesuré par le transducteur est différent de celui qui aurait été mesuré en absence de ce perturbateur magnétique. On dit alors que la mesure est « perturbée » par le perturbateur magnétique.

Ici, les sous-ensembles de mesures comprenant au moins une mesure perturbée par un perturbateur magnétique sont appelés « sous-ensemble perturbé ». A l'inverse, les sous-ensembles de mesures ne comprenant aucune mesure perturbée par un perturbateur magnétique sont appelés « sous-ensemble sain » ou « sous-ensemble non perturbé ».

Typiquement, les procédés d'identification de sous-ensembles perturbés par un perturbateur magnétique sont utilisés au sein de procédés de localisation d'un objet dans un référentiel.

Des procédés connus de localisation d'un objet dans un référentiel comporte :
- l'émission de champs magnétiques et la mesure de ces champs magnétiques à l'aide de N couples source monoaxe/transducteur monoaxe pour obtenir un ensemble de N mesures réelles, chaque mesure réelle de cet ensemble étant obtenue à l'aide d'un couple source monoaxe/transducteur monoaxe se distinguant des autres par :
   - la position de la source monoaxe utilisée pour émettre le champ magnétique, ou
   - la position du transducteur monoaxe utilisé pour mesurer le champ magnétique émis, ou
   - la fréquence du champ magnétique,
- la localisation de l'objet dans le référentiel à partir des mesures réalisées par les couples source monoaxe/transducteur monoaxe,.

Une source monoaxe de champ magnétique est une source qui émet préférentiellement le champ magnétique le long d'un seul axe. Par exemple, une bobine dont les spires sont enroulées autour d'un même axe est une source monoaxe de champ magnétique et l'axe d'émission préférentielle est confondu avec l'axe d'enroulement des spires.

De façon similaire, un transducteur monoaxe est un transducteur capable de mesurer la projection du champ magnétique sur un seul axe de mesure.

La localisation de l'objet à partir de champs magnétiques présente de nombreux avantages. Toutefois, en pratique, il existe de nombreux perturbateurs magnétiques dans l'environnement de l'objet susceptibles de perturber les mesures du champ magnétique et donc de fausser la localisation de l'objet.

Pour localiser correctement l'objet malgré la présence de perturbateurs magnétiques, il a déjà été proposé d'utiliser une redondance des mesures. En effet, étant donné la faible portée des perturbations magnétiques, on peut s'attendre à ce que la présence d'un perturbateur magnétique ne perturbe qu'un sous-ensemble des mesures. Ainsi, si les mesures sont redondantes, il existe souvent au moins un sous-ensemble non perturbé de mesures. Pour obtenir une redondance des mesures, le nombre N de couples source monoaxe/transducteur monoaxe est supérieur au nombre minimal Nₘᵢₙ de mesures nécessaires pour calculer la position de l'objet dans le référentiel.

Ensuite, lors de la localisation de l'objet, on peut donner plus de poids aux mesures non perturbées qu'aux mesures perturbées pour obtenir une localisation correcte de l'objet malgré la présence du perturbateur magnétique. Par exemple, la position de l'objet est seulement calculée à partir du sous-ensemble non perturbé de mesures.

Toutefois, avant cela, il est nécessaire de mettre en oeuvre un procédé d'identification du ou des sous-ensembles perturbés de mesures.

Jusqu'à présent, la détermination des sous-ensembles perturbés est réalisée lors d'une étape de calibration préalable (voir par exemple la demande de brevet U.S. 2008/0033282). Cette étape de calibration préalable comporte la construction d'une estimation Pᵢ de la position de l'objet dans le référentiel à partir d'un observateur Oᵢ faisant intervenir seulement un sous-ensemble Mᵢ des N mesures.

L'estimation Pᵢ est alors comparée à la position connue de l'objet afin de déterminer si le sous-ensemble Mᵢ comprend des mesures perturbées ou non.

Ce procédé ne fonctionne pas correctement si le perturbateur magnétique est uniquement présent par intermittence ou s'il se déplace dans le référentiel. De plus, le recours à une étape de calibration préalable est fastidieux.
De l'état de la technique est connu de :
- EP1887309A1,
- WO2006/054295A1,
- US6147480.

L'invention vise à remédier à au moins l'un de ces inconvénients en proposant un procédé plus simple d'identification d'un sous-ensemble perturbé de mesures.

Elle a donc pour objet un procédé conforme à la revendication 1.

Dans le procédé ci-dessus, si le sous-ensemble Mᵢ contient des mesures perturbées par le perturbateur magnétique, alors l'estimation Pᵢ de la position réelle de l'objet est erronée. Par conséquent, lorsque l'on estime les mesures qui correspondent à cette position Pᵢ erronée, celles-ci sont très différentes de ce qui est réellement mesuré. Cette différence entre les mesures estimées et les mesures réelles permet de déterminer si le sous-ensemble Mᵢ est perturbé ou non.

Pour être mis en oeuvre, le procédé ci-dessus ne nécessite aucune étape de calibration préalable lors de laquelle la position de l'objet est connue à l'avance. De plus, il peut être répété à chaque fois que les N mesures sont renouvelées. Ainsi, ce procédé fonctionne même si le perturbateur magnétique est uniquement présent par intermittence ou si la perturbation créée se modifie au cours du temps.

Les modes de réalisation de ce procédé d'identification peuvent comporter une ou plusieurs des caractéristiques des revendications dépendantes.

Ces modes de réalisation du procédé d'identification présentent en outre l'avantage suivant :
- le croisement des informations sur plusieurs sous-ensembles Mᵢ différents permet de préciser quelle est (sont) la (les) mesure(s) perturbée(s) par le perturbateur magnétique.

L'invention a également pour objet un procédé de localisation d'un objet dans un référentiel conforme à la revendication 4.

Les modes de réalisation de ce procédé de localisation peuvent comporter une ou plusieurs des caractéristiques des revendications dépendantes.

Ces modes de réalisation du procédé de localisation présentent en outre les avantages suivants :
- utiliser une combinaison des estimations Pᵢ obtenues à partir de plusieurs sous-ensembles non perturbés de mesures pour construire l'estimation finale de la position de l'objet permet d'accroître la précision de la localisation de l'objet;
- remplacer les mesures perturbées par des estimations des valeurs non perturbées de ces mesures permet d'accroître la précision de la localisation de l'objet.

L'invention a également pour objet un support d'enregistrement d'informations comportant des instructions pour l'exécution d'un des procédés ci-dessus, lorsque ces instructions sont exécutées par un calculateur électronique.

L'invention a également pour objet un dispositif d'identification conforme à la revendication 8.

Enfin, l'invention a également pour objet un système de localisation d'un objet dans un référentiel conforme à la revendication 9.

L'invention sera mieux comprise à la lecture de la description qui va suivre, donnée uniquement à titre d'exemple non limitatif et faite en se référant aux dessins sur lesquels :
- la figure 1 est une illustration schématique d'un système de localisation d'un objet dans un référentiel comportant un dispositif d'identification de sous-ensemble perturbé de mesures;
- la figure 2 est une illustration schématique d'un localisateur d'objet utilisé dans le système de la figure 1, et
- la figure 3 est un organigramme d'un procédé de localisation d'un objet dans le système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

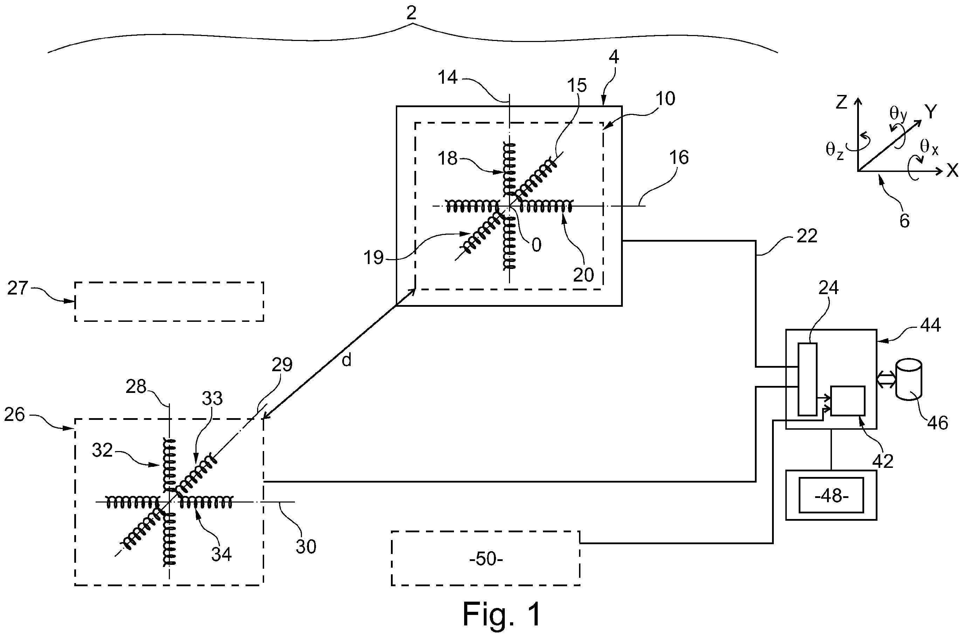

La figure 1 représente un système 2 de localisation d'un objet 4 dans un référentiel 6. L'objet 4 est par exemple une sonde ou un cathéter introduit dans un corps humain. L'objet 4 est mobile dans le référentiel 6 avec six degrés de liberté.

Le référentiel 6 est un référentiel fixe présentant trois axes orthogonaux X, Y et Z.

La localisation de l'objet 4 dans le référentiel 6 consiste à trouver sa position P. Ici, la position P est repérée par des coordonnées x, y, z et θₓ, θ_{y} et θ_{z}. Les coordonnées x, y et z indiquent l'emplacement de l'objet 4 dans le référentiel 6. Les coordonnées θₓ, θ_{y} et θ_{z} indiquent l'orientation angulaire de l'objet 4 par rapport, respectivement, aux axes X, Y et Z du référentiel 6.

Pour localiser l'objet 4 dans le référentiel 6, celui est par exemple équipé d'une source triaxe 10 de champ magnétique.

La source 10 est apte à générer un champ magnétique selon trois axes non colinéaires 14 à 16. Ici, ces axes 14 à 16 sont orthogonaux entre eux. Ces axes sont solidaires de l'objet 4.

A cet effet, la source 10 est ici composée de trois sources monoaxes 18 à 20. Les sources monoaxes 18 à 20 émettent, respectivement, des champs B₁ⱼ, B₂ⱼ et B₃ⱼ le long des axes 14, 15 et 16. L'indice 1,2 ou 3 est un identifiant de la source monoaxe et l'indice j est un identifiant de la fréquence fⱼ du champ magnétique émis par cette source monoaxe.

Chacune des sources monoaxes 18 à 20 peut être modélisée par une source ponctuelle de champ magnétique. De préférence, les sources monoaxes 18 à 20 sont agencées de manière à ce que leurs sources ponctuelles respectives occupent exactement le même emplacement dans le référentiel 6. Ici cet emplacement est repéré par un point O. Le point O est à l'intersection des axes 14 à 16.

Par exemple, chaque source monoaxe 18 à 20 est constituée d'une seule bobine enroulée autour, respectivement, des axes 14 à 16. Ici, chacune de ces bobines est divisée en deux groupes sensiblement identiques de spires réparties de façon symétrique de part et d'autre du point O le long de l'axe d'enroulement. Chaque groupe de spires est bobiné dans le même sens le long de l'axe d'enroulement.

Chacune de ces sources monoaxes 18 à 20 est raccordée par l'intermédiaire d'une liaison filaire souple 22 à une unité 24 de traitement.

L'unité 24 est également raccordée à deux capteurs triaxes 26 et 27 de champ magnétique de manière à avoir une redondance géométrique des mesures. Ces capteurs 26 et 27 sont espacés l'un de l'autre par une distance d. Par exemple, les capteurs 26 et 27 sont identiques et seul le capteur 26 est décrit et représenté en détail.

Le capteur 26 est fixe dans le référentiel 6. Ce capteur 26 est apte à mesurer des champs magnétiques le long de trois axes orthogonaux 28 à 30. Ici, les axes 28 à 30 sont, respectivement, parallèles aux axes Z, Y et X du référentiel 6.

A cet effet, le capteur 26 incorpore trois transducteurs monoaxes 32 à 34. Chacun de ces transducteurs présente une direction de mesure le long de laquelle sa sensibilité au champ magnétique est maximale. Ici, les directions de mesure de transducteur 32, 33 et 34 sont confondues, respectivement, avec les axes 28, 29 et 30.

Par exemple, les transducteurs 32, 33 et 34 sont des bobines enroulées, respectivement, autour des axes 28, 29 et 30.

La distance la plus courte d qui sépare chaque capteur triaxe 26 ou 27 de la source 10 est au moins trois fois supérieure à la plus grande dimension de la source 10. La plus grande dimension de la source 10 est la plus grande longueur d'une des sources monoaxes 18 à 20. Dans ces conditions, la source 10 peut être modélisée comme un dipole magnétique.

L'association d'une seule source monoaxe et d'un seul transducteur monoaxe travaillant à la même fréquence de travail forme un couple source monoaxe/transducteur monoaxe. Par exemple, la source monoaxe 14 et le transducteur 32 forment un premier couple source monoaxe/transducteur monoaxe lorsqu'ils travaillent à la fréquence f₁ et un deuxième couple source monoaxe/transducteur monoaxe lorsqu'ils travaillent à la fréquence f₂. Ce même transducteur 32 associé à la source monoaxe 15 forme un troisième et un quatrième couple source monoaxe/transducteur monoaxe lorsqu'ils travaillent, respectivement, aux fréquences f₁ et f₂.

Chaque couple source monoaxe/tranducteur monoaxe peut travailler à une fréquence différente de celle des autres couples. Toutefois, ici, à titre d'illustration seulement, on suppose que chaque source monoaxe travaille uniquement à la fréquence f₁. Il existe donc dix-huit couples source monoaxe/transducteur monoaxe. Chaque couple source monoaxe/transducteur monoaxe correspond à une mesure maᵢ d'une grandeur physique qui lui est propre. La mesure maᵢ est la projection du champ magnétique émis par la source monoaxe sur l'axe de mesure du transducteur monoaxe. La mesure maᵢ de chaque couple est indépendante de la mesure maⱼ d'un autre couple dans le sens où il est possible qu'un perturbateur magnétique perturbe l'une de ces mesures mais pas l'autre.

Dans ce mode de réalisation, il existe donc dix-huit mesures ma₁ à ma₁₈ indépendantes qui peuvent être réalisées en même temps ou séquentiellement. De préférence, ces dix-huit mesures ma₁ à ma₁₈ sont réalisées simultanément et réitérées à intervalles réguliers. L'intervalle régulier correspond à un pas de mesure. A chaque pas de mesure, les dix-huit mesures sont renouvelées par les dix-huit couples source monoaxe/transducteur monoaxe. Par exemple, le pas de mesure est égale à une période d'échantillonnage des signaux des transducteurs monoaxes.

L'ensemble de ces dix-huit mesures ma₁ à ma₁₈ est noté M et le nombre de mesure dans l'ensemble M est noté N. Ici, la description est faite dans le cas particulier où N est égal à dix-huit.

L'unité 24 de traitement alimente la source 10 en courant alternatif pour générer les champs magnétiques Bᵢ₁ et acquiert les champs magnétiques mesurés par les transducteurs 32 à 34 des capteurs 26 et 27.

Par exemple, l'unité 24 est un détecteur synchrone. Un exemple d'un tel détecteur synchrone est décrit en regard de la figure 16 du brevet U.S 6 528 989. Ainsi, l'unité 24 ne sera pas décrite ici plus en détail.

L'unité 24 est raccordée à un module 42 d'identification de sous-ensembles perturbés de mesures et de localisation de l'objet 4 dans le référentiel 6.

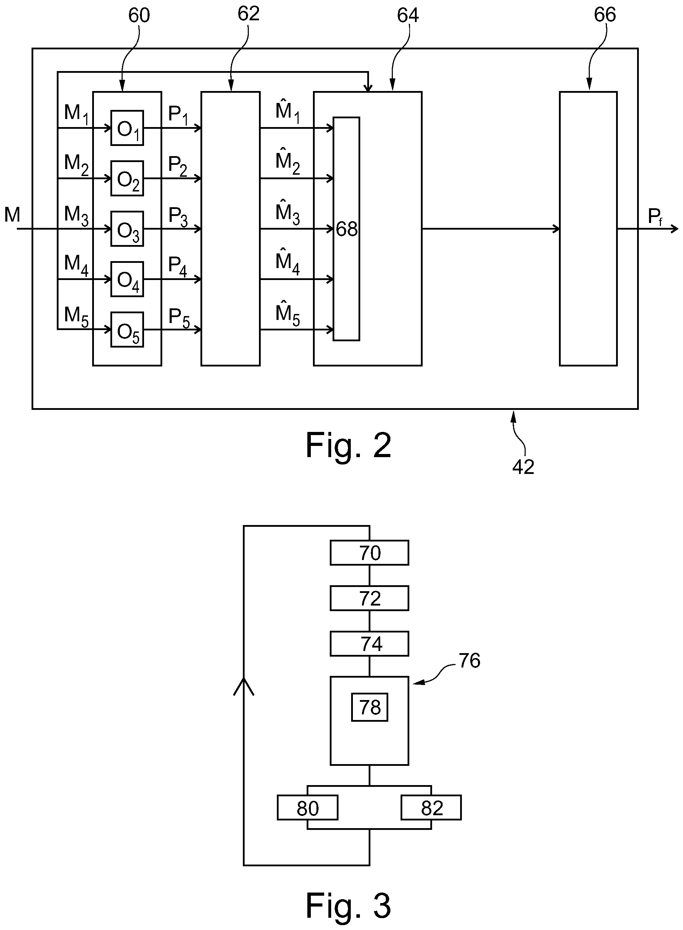

Par exemple, l'unité 24 se présente sous la forme d'une carte électronique tandis que le module 42 se présentent sous la forme d'un module logiciel. A cet effet, le système 2 comprend un calculateur électronique programmable 44 incorporant l'unité 24 et apte à exécuter des instructions enregistrées sur un support d'enregistrement d'informations. A cet effet, le calculateur 44 est raccordé à une mémoire 46 contenant des instructions pour l'exécution du procédé de la figure 3 lorsqu'elles sont exécutées par le calculateur 44. Le calculateur 44 est également raccordé à une interface homme-machine 48. Par exemple, l'interface homme-machine comprend un écran sur lequel est représentée la position de l'objet 4 dans le référentiel 6.

Le système 2 peut également comprendre d'autres appareils de mesure de grandeurs physiques, autres que des champs magnétiques, représentatifs de la position de l'objet 4 dans le référentiel 6. Par exemple, le système 2 comprend un appareil 50 tel qu'un appareil de radiographie ou une caméra. Les mesures de l'appareil 50 sont insensibles à la présence ou à l'absence d'un perturbateur magnétique.

La figure 2 représente plus en détail un exemple de mode de réalisation du module 42.

Le module 42 comporte successivement :
- un banc 60 d'observateurs Oᵢ,
- un estimateur 62 des mesures,
- un bloc 64 de détermination de sous-ensembles Mᵢ perturbés de mesures, et
- un localisateur 66 de la position de l'objet 4 dans le référentiel 6.

A chaque pas de mesure, le module 42 reçoit en entrée les N mesures de l'ensemble M. Cet ensemble M est transmis en entrée du banc 60 d'observateurs.

Chaque observateur Oᵢ est apte à résoudre un système d'équations afin d'obtenir une estimation Pᵢ de la position de l'objet 4 dans le référentiel 6. Chaque observateur Oᵢ utilise à cet effet uniquement un sous-ensemble Mᵢ des mesures ma₁ à ma₁₈. Le sous-ensemble Mᵢ contient R mesures choisies dans l'ensemble M, où R est un nombre entier strictement inférieur à N et supérieur ou égal à un seuil Nₘᵢₙ. Le seuil Nₘᵢₙ est le nombre minimal de mesures nécessaires pour estimer la position de l'objet 4 dans le référentiel 6. Ici, étant donné que la position de l'objet 4 est déterminée par six coordonnées, x, y, z, *θ*ₓ, *θ*_{y} et *θ*_{z} la valeur du seuil Nₘᵢₙ est égale à huit.

Le système d'équations d'un observateur Oᵢ est par exemple obtenu en modélisant les interactions magnétiques entre les sources monoaxes et les transducteurs monoaxes utilisés pour réaliser les R mesures du sous-ensemble Mᵢ sans tenir compte de la présence de perturbateurs magnétiques. Dans ce système d'équations, les coordonnées x, y, z, *θ*ₓ, *θ*_{y} et *θ*_{z} de l'objet 4 sont les inconnus.

Des informations sur la construction des observateurs peuvent être trouvées dans les documents suivants :
Tarentola, A. Siam (Ed.), « Inverse problem theory », 2005, Aster Elsevier (Ed.) « Parameter estimation and inverse problems », Elsevier, 2005

Ici, de préférence, ce système d'équations s'écrit sous la forme d'un filtre de Kalman.

Les observateurs Oᵢ sont choisis pour maximiser la probabilité que l'un de ces observateurs utilise uniquement un sous-ensemble Mᵢ non perturbé de mesures.

Par exemple, dans ce mode de réalisation, cinq observateurs Oᵢ à O₅ sont incorporés dans le banc 60 d'observateurs.

L'observateur O₁ utilise seulement les mesures du capteur triaxe 26. Le sous-ensemble M₁ comprend donc uniquement neuf mesures maᵢ. Ce sous-ensemble M₁ de mesures n'est pas perturbé si le perturbateur magnétique n'affecte que les mesures du capteur 27.

L'observateur 02 utilise uniquement les mesures réalisées par le capteur 27. Le sous-ensemble M₂ de mesure comprend donc uniquement neuf mesures maᵢ. Ce sous-ensemble M₂ n'est pas perturbé si le perturbateur magnétique n'affecte que les mesures du capteur 26.

Les observateurs O₃, O₄ et O₅ utilisent uniquement les mesures réalisées par, respectivement, :
- les transducteurs 33 et 34 des capteurs 26 et 27,
- les transducteurs 32 et 34 des capteurs 26 et 27, et
- les transducteurs 32 et 33 des capteurs 26 et 27.

Les sous-ensembles M₃, M₄ et M₅ comprennent donc chacun douze mesures maᵢ. Ces sous-ensembles M₃, M₄ et M₅ ne comprennent pas de mesure perturbée si le perturbateur magnétique n'affecte que les mesures réalisées, respectivement, avec les transducteurs 32, 33 et 34. Autrement dit, si le perturbateur magnétique affecte uniquement les champs magnétiques parallèles à l'une des directions X, Y ou Z, alors au moins deux des sous-ensembles M₃, M₄ et M₅ est sain.

L'estimateur 62 construit un ensemble *M̂ᵢ* contenant N estimations *m̂a*₁ᵢ à *m̂a*₁₈ᵢ des mesures réelles réalisées par chacun des couples source monoaxe/transducteur monoaxe du système 2 pour un objet placé dans la position estimée Pᵢ. Dans la notation *m̂a*ⱼᵢ, j est un identifiant de la mesure et i est un identifiant du sous-ensemble de mesures Mᵢ utilisé pour obtenir l'estimation Pᵢ. L'indice j est ici compris entre 1 et 18.

Typiquement, l'estimateur 62 résout un système d'équations qui relie les six coordonnées de la position P de l'objet 4 aux N estimations *m̂a*₁ᵢ à *m̂a*₁₈ᵢ. Ce système d'équations est par exemple obtenu en modélisant les interactions magnétiques entre chacune des sources monoaxes et chacun des transducteurs monoaxes du système 2 sans tenir compte, par exemple, de la présence éventuelle d'un perturbateur magnétique. Ce système d'équations est un modèle direct qui permet de résoudre le problème direct, c'est-à-dire le problème consistant à déterminer la valeur des mesures qui correspondent à une position donnée de l'objet 4.

Le bloc 64 détermine si le sous-ensemble de mesures Mᵢ est perturbé ou non. A cet effet, il comporte un comparateur 68 apte à comparer les estimations *m̂a*ⱼᵢ aux mesures réelles maⱼ.

Ici, les comparaisons des mesures estimées *m̂a*ⱼᵢ aux mesures réelles maⱼ sont réalisées en utilisant un ensemble Rᵢ de résidus Rⱼᵢ pour chaque observateur Oᵢ et un critère de décision Cᵢ pour chaque observateur Oᵢ.

Les résidus Rⱼᵢ sont par exemple égaux à la différence entre la mesure estimée *m̂a*ⱼᵢ et la mesure réelle correspondante maⱼ.

Le critère de décision Ci est ici égal à la différence entre une moyenne M_dᵢ et une moyenne M_uᵢ.

La moyenne M_dᵢ et la moyenne des résidus Rⱼᵢ obtenus pour les mesures délaissées par l'observateur Oᵢ. Les mesures délaissées sont les mesures qui n'appartiennent pas au sous-ensemble Mᵢ.

La moyenne M_uᵢ est la moyenne des résidus Rⱼᵢ obtenus pour les mesures utilisées par l'observateur Oᵢ. Les mesures utilisées sont les mesures qui appartiennent au sous-ensemble Mᵢ.

Le localisateur 66 délivre une estimation finale P_{f} de la position de l'objet 4. Cette estimation est obtenue en donnant un poids plus important aux sous-ensembles Mᵢ non perturbés par rapport aux sous-ensembles perturbés.

Les différents éléments du module 42 et leurs fonctionnements sont décrits plus en détail en regard de la figure 3.

L'association de la source triaxe 10, des capteurs triaxes 26 et 27, de l'unité 24, du banc 60 d'observateurs, de l'estimateur 62 et du bloc 64 forme un dispositif d'identification d'un sous-ensemble perturbé par un perturbateur magnétique.

Le fonctionnement du système 2 va maintenant être décrit en regard du procédé de la figure 3.

Initialement, à chaque pas de mesure, lors d'une étape 70, les N mesures réelles maⱼ sont réalisées par chacun des couples source monoaxe/transducteur monoaxe du système 2.

Ensuite, lors d'une étape 72, ces mesures sont transmises en entrée du banc 60 d'observateurs. A partir de ces mesures, lors de l'étape 72, chaque observateur Oᵢ construit une estimation Pᵢ de la position de l'objet 4 à partir du sous-ensemble Mᵢ de mesures qui lui correspond. Ainsi, à l'issu de l'étape 72, cinq estimations Pᵢ sont construites par le banc 60 d'observateurs.

Lors d'une étape 74, les ensembles *M̂ᵢ* sont construits à partir des estimations Pᵢ. A cet effet, chaque estimation Pᵢ est introduite dans l'estimateur 62 de manière à obtenir l'ensemble *M̂ᵢ* correspondant d'estimations *m̂a*₁ᵢ à *m̂a*₁₈ᵢ des N mesures réelles.

A l'issu de l'étape 74, cinq ensembles *M̂ᵢ* sont obtenus.

Ensuite, lors d'une étape 76, le bloc 64 détermine si les sous-ensembles Mᵢ sont perturbés ou non. A cet effet, lors d'une opération 78, pour chaque sous-ensemble *M̂ᵢ*, le comparateur 68 compare chaque mesure estimée *m̂a*ⱼᵢ à la mesure réelle correspondante ma; mesurée lors du même pas de mesure.

Plus précisément, pour chaque sous-ensemble *M̂ᵢ*, le comparateur 68 calcule les résidus Rⱼᵢ. Ensuite, il calcule les moyennes M_dᵢ et M_uᵢ. Enfin, le critère Cᵢ de décision est calculé.

Si seules les mesures délaissées sont perturbées alors la moyenne M_dᵢ a une valeur élevée tandis qu'au contraire la moyenne M_uᵢ a une valeur faible. Par conséquent, la différence entre les moyennes M_dᵢ et M_uᵢ est importante. La valeur du critère de décision Cᵢ est donc grande dans ce cas là. Une valeur importante du critère Cᵢ indique donc qu'il existe des mesures perturbées mais que celles-ci n'appartiennent pas au sous-ensemble Mᵢ.

Si les mesures délaissées et les mesures utilisées sont toutes les deux perturbées ou si aucune mesure n'est perturbée alors l'écart entre les moyennes M_dᵢ et M_uᵢ est plus réduit que dans le cas précédent. Dans ce cas, le critère Cᵢ est plus petit.

Ainsi, lors de l'opération 78, le critère Cᵢ est comparé à un seuil prédéterminé S₁. Si la valeur du critère Cᵢ dépasse ce seuil S₁ alors le sous-ensemble Mᵢ est identifié comme étant un sous-ensemble sain.

A l'inverse, si le critère Cᵢ est inférieur au seuil S₁ alors, on procède à une comparaison supplémentaire pour discriminer le cas où toutes les mesures sont perturbées du cas ou aucune des mesures n'est perturbée. Par exemple, cette comparaison supplémentaire consiste à comparer la moyenne M_dᵢ à un seuil prédéterminé S₂. Si la moyenne M_dᵢ est inférieure à ce seuil S₂ alors cela signifie qu'aucune mesure n'est perturbée. Le sous-ensemble Mᵢ ainsi que l'ensemble des autres sous-ensembles sont donc sains. Dans le cas contraire, cela signifie que tous les sous-ensembles Mᵢ sont perturbés.

Ensuite, lors d'une étape 80, la perturbation produite par le perturbateur magnétique est caractérisée plus précisément. Pour cela, les informations sur les différents sous-ensembles Mᵢ obtenues lors de l'étape 76 sont croisées les unes aux autres pour cerner plus précisément quelles sont la ou les mesures qui sont perturbées.

Par exemple, si le sous-ensemble M₁ est sain alors que le sous-ensemble M₂ est perturbé, cela signifie que le perturbateur magnétique est proche du capteur 27. De plus, si le sous-ensemble de mesure M₃ n'est pas perturbé, cela signifie que seul le transducteur 32 du capteur 27 est perturbé par ce perturbateur magnétique.

Dans un autre exemple, le sous-ensemble M₃ est sain. Cela signifie que le perturbateur magnétique perturbe uniquement les mesures le long de la direction Z. Si de plus les sous-ensembles M₁ et M₂ sont tous les deux perturbés alors cela signifie que le transducteur 32 des capteurs 26 et 27 sont les seuls transducteurs affectés par le perturbateur magnétique.

En parallèle de l'étape 80 lors d'une étape 82, le localisateur 66 établit l'estimation finale Pf de la position de l'objet 4 en pondérant les mesures perturbées pour limiter leur impact sur la précision de la localisation de l'objet 4.

Différentes méthodes d'estimation sont utilisables lors de cette étape. Par exemple, s'il a été déterminé qu'il n'existe aucun perturbateur magnétique, alors on utilise un observateur Oₜ reliant l'ensemble des N mesures de l'ensemble M à l'estimation P_{f}.

S'il a été déterminé qu'il existe un perturbateur et au moins un sous-ensemble non perturbé de mesures, alors le sous-ensemble Mᵢ correspondant à la valeur maximale du critère Cᵢ est sélectionné. Ensuite, l'estimation P_{f} peut être prise égale à l'estimation Pᵢ construite par l'observateur Oᵢ lors de l'étape 72.

Une autre solution, consiste à compenser les mesures perturbées. Pour cela, on utilise l'observateur complet Ot reliant les N mesures à l'estimation finale P_{f}. Dans ce modèle complet, les inconnues sont les mesures maⱼ. Les mesures ma; du sous-ensemble Mᵢ sain sont directement utilisées par l'observateur complet Oₜ. Par contre, les mesures perturbées ou potentiellement perturbées qui n'appartiennent pas au sous-ensemble Mᵢ sont remplacées par une estimation de leur valeur non perturbée. Par exemple, cette estimation est l'estimation *m̂a*ⱼᵢ obtenue à partir des mesures du sous-ensemble Mᵢ sain lors de l'étape 74. Ensuite, cette combinaison de mesures réelles et de mesures estimées est utilisée par l'observateur Oₜ pour obtenir l'estimation P_{f}.

S'il existe plusieurs sous-ensembles sains de mesures, il est également possible de combiner les estimations Pᵢ de la position de l'objet 4 obtenues à partir de ces différents sous-ensembles sains pour obtenir l'estimation finale P_{f}. Par exemple, on suppose ici que les sous-ensembles Mₖ et Mₗ de mesures ne sont sains. L'estimation finale P_{f} peut alors être obtenue à l'aide de la relation suivante : P_{f} = *α* Pₖ + (1- *α* )Pₗ, où *α* est un coefficient de pondération. Typiquement, le coefficient *α* est donné par la relation suivante : *α* = eₖ / (eₖ + eₗ), où ek et eₗ sont représentatifs des erreurs entre la position réelle de l'objet 4 et, respectivement, les estimations Pₖ et Pₗ de la position de l'objet 4.

Par exemple, les erreurs eₗ et ek sont calculées à partir de la différence entre les mesures estimées *m̂a*ⱼᵢ et les mesures réelles ma; correspondantes. Par exemple, dans un cas très simplifié, les erreurs eₖ et eₗ sont prises égales, respectivement, aux moyennes M_uₖ et M_uₗ.

Les étapes 70 à 82 sont réitérées à chaque pas de mesure. Ainsi, il est possible d'identifier la présence d'un perturbateur intermittent et d'adapter en temps réel les calculs de l'estimation P_{f} pour en tenir compte.

De nombreux autres modes de réalisation sont possibles. Par exemple, les observateurs Oᵢ peuvent être construits de façon différente. Les observateurs Oᵢ peuvent être obtenus à partir d'un seul modèle reliant les six coordonnées de la position de l'objet 4 aux dix-huit mesures de l'ensemble N. Ensuite, le système d'équations de chaque observateur Oᵢ est obtenu en ignorant dans ce modèle les mesures qui ne font pas partie du sous-ensemble Mᵢ. Par exemple, une façon d'ignorer ces mesures consiste à considérer que l'incertitude sur les mesures qui n'appartiennent pas au sous-ensemble Mᵢ sont très très supérieures aux incertitudes sur les mesures qui appartiennent au sous-ensemble Mᵢ. Plus d'informations sur de telles méthodes pour construire les observateurs Oᵢ peuvent être trouvées dans les articles suivants :
S. Lesecq, S. Gentil, N. Daraoui « Quadrator attitude estimation with data losses », European Control Conférence, ECC 09, Hongrie (2009)
S. Lesecq, S. Gentil, C. Berbra « Condition monitoring based on filter bank in the presence of data loss », Condition monitoring conférence, CM2009/MFPT2009 (2009).

Il est possible également d'utiliser d'autres méthodes de calcul de résidus et d'autres critère de décision. Par exemple, d'autres méthodes sont données dans les articles suivants :
V. Sircoulond, G. Hoblos, H. Chafouk, J. Ragot, « Evaluation de la qualité d'estimation en fonction de la perte de capteurs », Diagnostic des systèmes complexes, Edition 2008, pages 9 à 26.
J. Ragot, « Validation et réconciliation des données, approche conventionnelle, difficultés et développement », Les techniques de l'industrie minérale (2006) 29, pages 22 à 30.

En variante, le système d'équations du modèle direct tient compte de la présence d'un ou plusieurs perturbateur dont, par exemple, les positions sont connues.

Le procédé de la figure 3 peut être précédé d'une étape de détection des mesures perturbées tel que décrit dans la demande de brevet FR 0 953 462.

Ce qui a été décrit précédemment s'applique également à des systèmes de localisation de l'objet 4 dans un référentiel à une ou deux dimensions. De même, le système 2 peut être simplifié si l'on ne souhaite pas mesurer l'emplacement ou l'orientation angulaire de l'objet 4 ou si l'objet 4 possède moins de degrés de liberté. Dans ces cas-là, le nombre de couples source monoaxe/transducteur monoaxe peut être réduit. De plus, les observateurs et les estimateurs sont simplifiés en conséquence.

Le nombre de capteurs et de sources triaxes peut être modifié. Par exemple, dans un autre mode de réalisation, le système 2 comporte uniquement un capteur triaxe et une source triaxe. Un capteur triaxe et une source triaxe correspondent à neuf sous-ensembles Mᵢ de huit mesures chacun. Il est également possible d'augmenter le nombre de capteurs ou de sources monoaxes. Par exemple, dans un mode de réalisation particulier, le système 2 comporte trois capteurs triaxes et une source triaxe ce qui permet d'obtenir vingt-sept sous-ensembles Mᵢ de mesures.

Il est également possible d'augmenter le nombre de couples source monoaxe/transducteur monoaxe en faisant travailler un ou plusieurs de ces couples à plusieurs fréquences différentes. Par exemple, chaque couple travail à deux fréquences f₁ et f₂.

Les champs magnétiques peuvent être émis de façon continue, de façon pulsée ou périodique.

La localisation et la détection de perturbateurs ont été décrites dans le cas particulier où c'est l'objet 4 qui est mobile par rapport à un référentiel 6 fixe. Ce qui a été décrit précédemment s'applique également à la situation inverse où c'est l'objet 4 qui est fixe et le référentiel 6 qui est mobile. Dans ce cas-là, l'objet 4 est fixe et ce sont les transducteurs monoaxes qui se déplacent par rapport à l'objet 4.

Il est également possible d'inverser la position des sources et des capteurs. Par exemple, une ou plusieurs capteurs tri-axes de champ magnétique sont intégrés dans l'objet 4 et une ou plusieurs sources tri-axes sont fixées sans aucun degré de liberté au référentiel 6.

Lorsqu'un perturbateur est détecté, il est possible de substituer aux mesures perturbées des mesures obtenues à partir de l'appareil 50 ou de prendre en compte en plus des mesures obtenues à partir de l'appareil 50.

L'orientation de l'objet à localiser peut être définie par une autre méthode telle que des angles d'Euler ou des quaternions.

Ce qui a été décrit ne s'applique pas uniquement au domaine médical mais au contraire à tout domaine où il est nécessaire de détecter un perturbateur ou de localiser un objet en utilisant des champs magnétiques.

## Revendications

1. Procédé d'identification d'un sous-ensemble de mesures comprenant une mesure perturbée par un perturbateur magnétique, ce procédé comportant :
a) l'émission de champs magnétiques et la mesure (70) de ces champs magnétiques à l'aide de N couples source monoaxe/transducteur monoaxe pour obtenir un ensemble de N mesures réelles, chaque mesure réelle de cet ensemble étant obtenue à l'aide d'un couple source monoaxe/transducteur monoaxe se distinguant des autres par :
• la position de la source monoaxe utilisée pour émettre le champ magnétique, ou
• la position du transducteur monoaxe utilisé pour mesurer le champ magnétique, ou
• la fréquence du champ magnétique,
l'un de la source monoaxe et du transducteur monoaxe étant solidaire d'un objet mobile et l'autre du référentiel dans lequel la position de l'objet doit être exprimée,
b) la construction (72) d'une estimation Pᵢ de la position de l'objet dans le référentiel à partir d'un observateur Oᵢ faisant intervenir seulement un sous-ensemble Mᵢ des N mesures, cet observateur Oᵢ étant apte à résoudre un système d'équations afin d'obtenir l'estimation Pᵢ en utilisant à cet effet uniquement le sous-ensemble Mᵢ des N mesures,
**caractérisé en ce que** le procédé comprend également :
c) l'estimation (74) des N mesures à partir de la position estimée Pᵢ et d'au moins un modèle direct reliant la position de l'objet à l'ensemble des N mesures, le modèle direct correspondant à un système d'équations obtenu en modélisant les interactions magnétiques entre chacune des sources monoaxes et chacun des transducteurs monoaxes, et
d) la détermination (76) si ce sous-ensemble Mᵢ de mesures comprend une mesure perturbée ou non en comparant les mesures estimées lors de l'étape c) aux mesures réelles obtenues lors de l'étape a).

2. Procédé selon la revendication 1, dans lequel le procédé comprend également :
- au moins la construction (72) d'une autre estimation Pⱼ de la même position de l'objet dans le référentiel à partir d'un observateur Oⱼ faisant intervenir seulement un sous-ensemble Mⱼ des N mesures, où les sous-ensembles Mⱼ et Mᵢ ont au moins une mesure en commun et diffère l'un de l'autre par au moins une autre mesure,
- l'estimation (74) des N mesures à partir de la position estimée Pⱼ et du modèle direct reliant la position de l'objet à l'ensemble des N mesures,
- la détermination (76) si ce sous-ensemble Mⱼ contient des mesures perturbées ou non en comparant les mesures estimées aux mesures réelles, et
- le croisement (80) des informations sur la présence ou l'absence de mesures perturbées dans les sous-ensembles Mᵢ et Mⱼ pour cerner plus précisément la ou les mesures perturbées.

3. Procédé selon l'une quelconque des revendications précédentes, dans lequel l'étape d) comprend :
- le calcul d'au moins un résidu fonction de la différence entre les mesures estimées et les mesures réelles, et
- la détermination si le sous-ensemble comprend au moins une mesure perturbée si ce résidu franchit un seuil prédéterminé.

4. Procédé de localisation d'un objet dans un référentiel, ce procédé comportant :
- l'émission de champs magnétiques et la mesure (70) de ces champs magnétiques à l'aide de N couples source monoaxe/transducteur monoaxe pour obtenir un ensemble de N mesures réelles, chaque mesure réelle de cet ensemble étant obtenue à l'aide d'un couple source monoaxe/transducteur monoaxe se distinguant des autres par :
• la position de la source monoaxe utilisée pour émettre le champ magnétique, ou
• la position du transducteur monoaxe utilisé pour mesurer le champ magnétique émis, ou
• la fréquence du champ magnétique,
- la localisation (82) de l'objet dans le référentiel à partir des mesures réalisées par les couples source monoaxe/transducteur monoaxe,
**caractérisé en ce que** le procédé comprend également :
- la réitération de l'exécution d'un procédé d'identification d'un sous-ensemble de mesures comprenant des mesures perturbées par un perturbateur magnétique conforme à l'une quelconque des revendications précédentes pour plusieurs sous-ensembles Mᵢ de mesures parmi les N mesures réelles jusqu'à trouver au moins un sous-ensemble de mesures ne comprenant pas de mesures perturbées, et
- lors de la localisation de l'objet, seulement si un sous-ensemble de mesures ne comprenant pas de mesures perturbées a été trouvé, la pondération de mesures n'appartenant pas à ce sous-ensemble de manière à limiter leur impact, par rapport aux mesures non perturbées appartenant à ce sous-ensemble, sur la localisation de l'objet.

5. Procédé selon la revendication 4, dans lequel si plusieurs sous-ensembles de mesures sont identifiés comme ne comprenant pas de mesures perturbées, alors le procédé comprend la localisation (82) de l'objet à partir d'une combinaison des estimations Pᵢ de la même position obtenues à partir de ces sous-ensembles de mesures ne comprenant pas de mesures perturbées.

6. Procédé selon l'une quelconque des revendications 4 à 5, dans lequel le procédé comprend, lors de la localisation (82) de l'objet, le remplacement d'au moins une mesure identifiée comme perturbée par une estimation de sa valeur non perturbée obtenue à partir d'un sous-ensemble identifié comme ne comprenant pas de mesures perturbées.

7. Support (46) d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

8. Dispositif d'identification d'un sous-ensemble comprenant une mesure perturbée par un perturbateur magnétique, ce dispositif comportant :
- N couples de source monoaxe/transducteur monoaxe (18-20, 32-34) pour obtenir un ensemble de N mesures réelles, chaque mesure réelle de cet ensemble étant obtenue à l'aide d'un couple source monoaxe/transducteur monoaxe se distinguant des autres par :
• la position de la source monoaxe utilisée pour émettre le champ magnétique, ou
• la position du transducteur monoaxe utilisé pour mesurer le champ magnétique, ou
• la fréquence du champ magnétique,
- au moins un observateur Oᵢ apte à construire une estimation Pᵢ de la position de l'objet à partir de seulement un sous-ensemble Mᵢ des N mesures, cet observateur Oᵢ étant apte à résoudre un système d'équations afin d'obtenir l'estimation Pᵢ en utilisant à cet effet uniquement le sous-ensemble Mᵢ des N mesures,
**caractérisé en ce que** le dispositif comprend également :
- un estimateur (62) des N mesures à partir de la position estimée Pᵢ et d'au moins un modèle direct reliant la position de l'objet à l'ensemble des N mesures, le modèle direct correspondant à un système d'équations obtenu en modélisant les interactions magnétiques entre chacune des sources monoaxes et chacun des transducteurs monoaxes, et
- un bloc (64) apte à déterminer si le sous-ensemble de mesures comprend une mesure perturbée ou non en comparant les mesures estimées aux mesures réelles.

9. Système de localisation d'un objet dans un référentiel, ce système comportant :
- N couples de source monoaxe/transducteur monoaxe (18-20, 32-34) pour obtenir un ensemble de N mesures réelles, chaque mesure réelle de cet ensemble étant obtenue à l'aide d'un couple source monoaxe/transducteur monoaxe se distinguant des autres par :
• la position de la source monoaxe utilisée pour émettre le champ magnétique, ou
• la position du transducteur monoaxe utilisé pour mesurer le champ magnétique, ou
la fréquence du champ magnétique,
- un module (42) de localisation de l'objet dans le référentiel à partir des mesures réalisées par les couples source monoaxe/transducteur monoaxe,
**caractérisé en ce que** le le système comprend également :
- un dispositif d'identification d'un sous-ensemble de mesures comprenant une mesure perturbée par un perturbateur magnétique conforme à la revendication 8, et
- le module (42) de localisation est apte :
• à utiliser le dispositif d'identification pour trouver au moins un sous-ensemble de mesures non perturbées parmi plusieurs sous-ensembles Mᵢ de mesures, et
• seulement si un sous-ensemble de mesures ne comprenant pas de mesures perturbées a été trouvé, à pondérer des mesures n'appartenant pas à ce sous-ensemble de manière à limiter leur impact, par rapport aux mesures non perturbées appartenant à ce sous-ensemble, sur la localisation de l'objet.

## Patentansprüche

1. Verfahren zur Ermittlung einer Teilmenge von Messungen, die eine von einem magnetischen Störer gestörte Messung enthält, wobei dieses Verfahren umfasst:
a) das Aussenden von Magnetfeldern und das Messen (70) dieser Magnetfelder mithilfe von N Paaren von monoaxialer Quelle und monoaxialem Messwandler, um eine Menge von N realen Messungen zu erhalten, wobei jede reale Messung dieser Menge mithilfe eines Paares von monoaxialer Quelle und monoaxialem Messwandler erhalten wird, das sich von den anderen unterscheidet durch:
• die Position der zum Aussenden des Magnetfeldes verwendeten monoaxialen Quelle oder
• die Position des zum Messen des Magnetfeldes verwendeten monoaxialen Messwandlers oder
• die Frequenz des Magnetfeldes,
wobei die/der eine der monoaxialen Quelle und des monoaxialen Messwandlers fest mit einem beweglichen Objekt verbunden ist und die/der andere mit dem Referenzsystem, in dem die Position des Objekts ausgedrückt werden soll,
b) das Konstruieren (72) einer Schätzung Pᵢ der Position des Objekts im Referenzsystem ausgehend von einem Beobachter Oᵢ, der nur eine Teilmenge Mᵢ der N Messungen einbezieht, wobei dieser Beobachter Oᵢ geeignet ist, ein Gleichungssystem zu lösen, um die Schätzung Pᵢ zu erhalten, wobei zu diesem Zweck nur die Teilmenge Mᵢ der N Messungen verwendet wird,
**dadurch gekennzeichnet, dass** das Verfahren auch umfasst:
c) das Schätzen (74) der N Messungen ausgehend von der geschätzten Position Pᵢ und von mindestens einem direkten Modell, das die Position des Objekts mit der Menge der N Messungen verknüpft, wobei das direkte Modell einem Gleichungssystem entspricht, das erhalten wird, indem die magnetischen Interaktionen zwischen jeder der monoaxialen Quellen und jedem der monoaxialen Messwandler modelliert werden, und
d) das Bestimmen (76), ob diese Teilmenge Mᵢ von Messungen eine gestörte Messung enthält oder nicht, indem die im Schritt c) geschätzten Messungen mit den im Schritt a) erhaltenen realen Messungen verglichen werden.

2. Verfahren nach Anspruch 1, wobei das Verfahren auch umfasst:
- mindestens das Konstruieren (72) einer weiteren Schätzung Pⱼ derselben Position des Objekts im Referenzsystem ausgehend von einem Beobachter Oⱼ, der nur eine Teilmenge Mⱼ der N Messungen einbezieht, wobei die Teilmengen Mⱼ und Mᵢ mindestens eine Messung gemein haben und sich voneinander durch mindestens eine weitere Messung unterscheiden,
- das Schätzen (74) der N Messungen ausgehend von der geschätzten Position Pⱼ und von dem direkten Modell, das die Position des Objekts mit der Menge der N Messungen verknüpft,
- das Bestimmen (76), ob diese Teilmenge Mⱼ gestörte Messungen enthält oder nicht, indem die geschätzten Messungen mit den realen Messungen verglichen werden, und
- das Abgleichen (80) der Informationen über das Vorliegen oder Nichtvorliegen von gestörten Messungen in den Teilmengen Mᵢ und Mⱼ, um die gestörte Messung oder die gestörten Messungen genauer zu einzugrenzen.

3. Verfahren nach einem der vorhergehenden Ansprüche, bei dem der Schritt d) umfasst:
- das Berechnen mindestens eines Residuums als Funktion der Differenz zwischen den geschätzten Messungen und den realen Messungen und
- das Bestimmen, ob die Teilmenge mindestens eine gestörte Messung enthält, wenn dieses Residuum einen vorbestimmten Schwellenwert überschreitet.

4. Verfahren zur Ortung eines Objekts in einem Referenzsystem, wobei dieses Verfahren umfasst:
- das Aussenden von Magnetfeldern und das Messen (70) dieser Magnetfelder mithilfe von N Paaren von monoaxialer Quelle und monoaxialem Messwandler, um eine Menge von N realen Messungen zu erhalten, wobei jede reale Messung dieser Menge mithilfe eines Paares von monoaxialer Quelle und monoaxialem Messwandler erhalten wird, das sich von den anderen unterscheidet durch:
• die Position der zum Aussenden des Magnetfeldes verwendeten monoaxialen Quelle oder
• die Position des zum Messen des ausgesendeten Magnetfeldes verwendeten monoaxialen Messwandlers oder
• die Frequenz des Magnetfeldes,
- das Orten (82) des Objekts im Referenzsystem ausgehend von Messungen, die von den Paaren von monoaxialer Quelle und monoaxialem Messwandler ausgeführt werden, **dadurch gekennzeichnet, dass** das Verfahren auch umfasst:
- das Reiterieren der Durchführung eines Verfahrens zur Ermittlung einer Teilmenge von Messungen, die von einem magnetischen Störer gestörte Messungen enthält, nach einem der vorhergehenden Ansprüche für mehrere Teilmengen Mᵢ von Messungen unter den N realen Messungen, bis mindestens eine Teilmenge von Messungen gefunden wird, die keine gestörten Messungen enthält, und
- beim Orten des Objekts nur dann, wenn eine Teilmenge von Messungen, die keine gestörten Messungen enthält, gefunden wurde, das Gewichten von Messungen, die dieser Teilmenge nicht angehören, um ihre Auswirkungen, bezogen auf die dieser Teilmenge angehörenden nicht gestörten Messungen, auf die Ortung des Objekts zu begrenzen.

5. Verfahren nach Anspruch 4, bei dem, wenn mehrere Teilmengen von Messungen als keine gestörten Messungen umfassend ermittelt wurden, das Verfahren dann die Ortung (82) des Objekts ausgehend von einer Kombination der Schätzungen Pᵢ derselben Position umfasst, die ausgehend von diesen Teilmengen von Messungen, die keine gestörten Messungen umfassen, erhalten wurden.

6. Verfahren nach einem der Ansprüche 4 bis 5, wobei das Verfahren, beim Orten (82) des Objekts, das Ersetzen mindestens einer Messung umfasst, die als gestört ermittelt wurde, durch eine Schätzung ihres nicht gestörten Werts, die ausgehend von einer als keine gestörten Messungen enthaltend ermittelten Teilmenge erhalten wird.

7. Datenspeichermedium (46), **dadurch gekennzeichnet, dass** es Anweisungen umfasst zur Ausführung eines Verfahrens nach einem der vorhergehenden Ansprüche, wenn diese Anweisungen von einem elektronischen Rechner ausgeführt werden.

8. Vorrichtung zur Ermittlung einer Teilmenge, die eine von einem magnetischen Störer gestörte Messung enthält, wobei diese Vorrichtung umfasst:
- N Paare von monoaxialer Quelle und monoaxialem Messwandler (18-20, 32-34), um eine Menge von N realen Messungen zu erhalten, wobei jede reale Messung dieser Menge mithilfe eines Paares von monoaxialer Quelle und monoaxialem Messwandler erhalten wird, das sich von den anderen unterscheidet durch:
• die Position der zum Aussenden des Magnetfeldes verwendeten monoaxialen Quelle oder
• die Position des zum Messen des Magnetfeldes verwendeten monoaxialen Messwandlers oder
• die Frequenz des Magnetfeldes,
- mindestens einen Beobachter Oᵢ, der geeignet ist, eine Schätzung Pᵢ der Position des Objekts ausgehend von nur einer Teilmenge Mᵢ der N Messungen zu konstruieren, wobei dieser Beobachter Oᵢ geeignet ist, ein Gleichungssystem zu lösen, um die Schätzung Pᵢ zu erhalten, wobei zu diesem Zweck nur die Teilmenge Mᵢ der N Messungen verwendet wird,
**dadurch gekennzeichnet, dass** die Vorrichtung auch umfasst:
- einen Schätzer (62) der N Messungen ausgehend von der geschätzten Position Pᵢ und von mindestens einem direkten Modell, das die Position des Objekts mit der Menge der N Messungen verknüpft, wobei das direkte Modell einem Gleichungssystem entspricht, das erhalten wird, indem die magnetischen Interaktionen zwischen jeder der monoaxialen Quellen und jedem der monoaxialen Messwandler modelliert werden, und
- einen Block (64), der geeignet ist zu bestimmen, ob die Teilmenge von Messungen eine gestörte Messung enthält oder nicht, indem die geschätzten Messungen mit den realen Messungen verglichen werden.

9. System zur Ortung eines Objekts in einem Referenzsystem, wobei dieses System umfasst:
- N Paare von monoaxialer Quelle und monoaxialem Messwandler (18-20, 32-34), um eine Menge von N realen Messungen zu erhalten, wobei jede reale Messung dieser Menge mithilfe eines Paares von monoaxialer Quelle und monoaxialem Messwandler erhalten wird, das sich von den anderen unterscheidet durch:
• die Position der zum Aussenden des Magnetfeldes verwendeten monoaxialen Quelle oder
• die Position des zum Messen des Magnetfeldes verwendeten monoaxialen Messwandlers oder
die Frequenz des Magnetfeldes,
- ein Modul (42) zur Ortung des Objekts im Referenzsystem ausgehend von den Messungen, die von den Paaren von monoaxialer Quelle und monoaxialem Messwandler ausgeführt werden, **dadurch gekennzeichnet, dass** das System auch umfasst:
- eine Vorrichtung zur Ermittlung einer Teilmenge von Messungen, die eine von einem magnetischen Störer gestörte Messung enthält, nach Anspruch 8, und
- das Modul (42) zur Ortung ist geeignet:
• die Vorrichtung zur Ermittlung zu verwenden, um mindestens eine Teilmenge von nicht gestörten Messungen unter mehreren Teilmengen Mᵢ von Messungen zu finden, und
• nur dann, wenn eine Teilemenge von Messungen gefunden wird, die keine gestörten Messungen enthält, Messungen, die dieser Teilmenge nicht angehören, zu gewichten, so dass ihre Auswirkungen, bezogen auf die dieser Teilmenge angehörenden nicht gestörten Messungen, auf die Ortung des Objekts begrenzt werden.

## Claims

1. Method for identifying a subset of measurements comprising a measurement disturbed by a magnetic disturber, this method comprising:
a) the emission of magnetic fields and the measurement (70) of these magnetic fields with the aid of N monoaxial source/monoaxial transducer pairs so as to obtain a set of N real measurements, each real measurement of this set being obtained with the aid of a monoaxial source/monoaxial transducer pair being distinguished from the others by:
• the position of the monoaxial source used to emit the magnetic field, or
• the position of the monoaxial transducer used to measure the magnetic field, or
• the frequency of the magnetic field,
one of the monoaxial source and of the monoaxial transducer being tied to a mobile object and the other to the frame of reference in which the position of the object must be expressed,
b) the construction (72) of an estimation Pᵢ of the position of the object in the frame of reference on the basis of an observer Oᵢ involving only a subset Mᵢ of the N measurements, this observer Oᵢ being able to solve a system of equations in order to obtain the estimation Pᵢ using for this purpose only the subset Mᵢ of the N measurements,
**characterized in that** the method also comprises:
c) the estimation (74) of the N measurements on the basis of the estimated position Pᵢ and of at least one direct model linking the position of the object to the set of N measurements, the direct model corresponding to a system of equations obtained by modelling the magnetic interactions between each of the monoaxial sources and each of the monoaxial transducers, and
d) the determination (76) whether or not this subset Mᵢ of measurements comprises a disturbed measurement by comparing the measurements estimated during step c) with the real measurements obtained during step a).

2. Method according to Claim 1, in which the method also comprises:
- at least the construction (72) of another estimation Pⱼ of the same position of the object in the frame of reference on the basis of an observer Oⱼ involving only a subset Mⱼ of the N measurements, where the subsets Mⱼ and Mᵢ have at least one measurement in common and differ from one another by at least one other measurement,
- the estimation (74) of the N measurements on the basis of the estimated position Pⱼ and of the direct model linking the position of the object to the set of N measurements,
- the determination (76) whether or not this subset Mⱼ contains disturbed measurements by comparing the estimated measurements with the real measurements, and
- the cross-checking (80) of the information about the presence or the absence of disturbed measurements in the subsets Mᵢ and Mⱼ so as to more precisely pinpoint the disturbed measurement or measurements.

3. Method according to either one of the preceding claims, in which step d) comprises:
- the computation of at least one residual dependent on the difference between the estimated measurements and the real measurements, and
- the determination whether the subset comprises at least one disturbed measurement if this residual oversteps a predetermined threshold.

4. Method for locating an object in a frame of reference, this method comprising:
- the emission of magnetic fields and the measurement (70) of these magnetic fields with the aid of N monoaxial source/monoaxial transducer pairs so as to obtain a set of N real measurements, each real measurement of this set being obtained with the aid of a monoaxial source/monoaxial transducer pair being distinguished from the others by:
• the position of the monoaxial source used to emit the magnetic field, or
• the position of the monoaxial transducer used to measure the magnetic field emitted, or
• the frequency of the magnetic field,
- the location (82) of the object in the frame of reference on the basis of the measurements carried out by the monoaxial source/monoaxial transducer pairs, **characterized in that** the method also comprises:
- the repetition of the execution of a method for identifying a subset of measurements comprising measurements disturbed by a magnetic disturber in accordance with any one of the preceding claims for several subsets Mᵢ of measurements from among the N real measurements until it finds at least one subset of measurements not comprising any disturbed measurements, and
- during the location of the object, only if a subset of measurements not comprising any disturbed measurements has been found, the weighting of measurements not belonging to this subset so as to limit their impact, with respect to the undisturbed measurements belonging to this subset, on the location of the object.

5. Method according to Claim 4, in which if several subsets of measurements are identified as not comprising any disturbed measurements, then the method comprises the location (82) of the object on the basis of a combination of the estimations Pᵢ of the same position, obtained on the basis of these subsets of measurements not comprising any disturbed measurements.

6. Method according to either one of Claims 4 and 5, in which the method comprises, during the location (82) of the object, the replacement of at least one measurement identified as disturbed by an estimation of its undisturbed value obtained on the basis of a subset identified as not comprising any disturbed measurements.

7. Medium (46) for recording information, **characterized in that** it comprises instructions for the execution of a method in accordance with any one of the preceding claims, when these instructions are executed by an electronic computer.

8. Device for identifying a subset comprising a measurement disturbed by a magnetic disturber, this device comprising:
- N monoaxial source/monoaxial transducer pairs (18-20, 32-34) for obtaining a set of N real measurements, each real measurement of this set being obtained with the aid of a monoaxial source/monoaxial transducer pair being distinguished from the others by:
• the position of the monoaxial source used to emit the magnetic field, or
• the position of the monoaxial transducer used to measure the magnetic field, or
• the frequency of the magnetic field,
- at least one observer Oᵢ able to construct an estimation Pᵢ of the position of the object on the basis of only a subset Mᵢ of the N measurements, this observer Oᵢ being able to solve a system of equations in order to obtain the estimation Pᵢ using for this purpose only the subset Mᵢ of the N measurements,
**characterized in that** the device also comprises:
- an estimator (62) of the N measurements on the basis of the estimated position Pᵢ and of at least one direct model linking the position of the object to the set of N measurements, the direct model corresponding to a system of equations obtained by modelling the magnetic interactions between each of the monoaxial sources and each of the monoaxial transducers, and
- a block (64) able to determine whether or not the subset of measurements comprises a disturbed measurement by comparing the estimated measurements with the real measurements.

9. System for locating an object in a frame of reference, this system comprising:
- N monoaxial source/monoaxial transducer pairs (18-20, 32-34) for obtaining a set of N real measurements, each real measurement of this set being obtained with the aid of a monoaxial source/monoaxial transducer pair being distinguished from the others by:
• the position of the monoaxial source used to emit the magnetic field, or
• the position of the monoaxial transducer used to measure the magnetic field, or the frequency of the magnetic field,
- a module (42) for locating the object in the frame of reference on the basis of the measurements carried out by the monoaxial source/monoaxial transducer pairs, **characterized in that** the system also comprises:
- a device for identifying a subset of measurements comprising a measurement disturbed by a magnetic disturber in accordance with Claim 8, and
- the location module (42) is able:
• to use the identification device to find at least one subset of undisturbed measurements from among several subsets Mᵢ of measurements, and
• only if a subset of measurements not comprising any disturbed measurements has been found, to weight measurements not belonging to this subset so as to limit their impact, with respect to the undisturbed measurements belonging to this subset, on the location of the object.
